(19)

Europäisches Patentamt

European Patent Office

Office européen des brevets

(11) **EP 3 524 666 A1**

(12) **EUROPEAN PATENT APPLICATION**
published in accordance with Art. 153(4) EPC

(43) Date of publication:
**14.08.2019 Bulletin 2019/33**

(21) Application number: **17858689.7**

(22) Date of filing: **28.09.2017**

(51) Int Cl.:
*C12G 3/08* (2006.01)     *C12G 3/12* (2006.01)
*A23L 5/20* (2016.01)

(86) International application number:
**PCT/KR2017/010847**

(87) International publication number:
**WO 2018/066895 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.10.2016 KR 20160130094**

(71) Applicant: **CJ Cheiljedang Corporation**
**Seoul 04560 (KR)**

(72) Inventors:
• **CHOI, Jong Min**
**Suwon-si**
**Gyeonggi-do 16567 (KR)**
• **KIM, Su-Jeong**
**Suwon-si**
**Gyeonggi-do 16509 (KR)**
• **BAK, Youn-Kyung**
**Suwon-si**
**Gyeonggi-do 16698 (KR)**

• **PARK, Jung Gyu**
**Incheon 22187 (KR)**
• **BYUN, Sung Bae**
**Sejong 30083 (KR)**
• **SHIM, Dong Seok**
**Yongin-si**
**Gyeonggi-do 16868 (KR)**
• **LEE, In**
**Suwon-si**
**Gyeonggi-do 16509 (KR)**
• **PARK, Seung Won**
**Yongin-si**
**Gyeonggi-do 16894 (KR)**
• **JUNG, Dong Chul**
**Seoul 06779 (KR)**

(74) Representative: **Robson, Aidan John**
**Reddie & Grose LLP**
**The White Chapel Building**
**10 Whitechapel High Street**
**London E1 8QS (GB)**

(54) **METHOD FOR IMPROVING AFTERTASTE OF ALCOHOLIC BEVERAGES USING ALLULOSE**

(57)     The present invention relates to an agent for improving aftertaste of alcoholic beverages comprising allulose-containing saccharides, and a method for improving aftertaste of alcoholic beverages using allulose.

Fig. 1

Change in alcohol bitterness according to amount of added saccharide

EP 3 524 666 A1

**Description**

**Field of the Invention**

The present invention relates to an agent for improving an aftertaste of an alcoholic beverage, which includes allulose-containing saccharides, and a method of improving an aftertaste of an alcoholic beverage using allulose.

**Description of the Related Art**

Ethanol (i.e., ethyl alcohol) contained in foods has an unpleasant flavor such as unique alcohol smell or bitterness. Such an unpleasant flavor becomes stronger with increasing alcohol concentration. Particularly, in the case of distilled alcoholic beverage having a high alcohol concentration, such as soju or rum, increase in sales is slowing down due to the unpleasant flavor thereof. Recent development of soju with low alcohol content or fruit soju with added flavor and increase in sales volume represents changes in preference of consumers who avoid the strong bitterness and smell of alcohol.

There has been proposed a method of using a glycoside-based sweetener such as steviol glycoside or enzyme-treated stevia instead of a sugar-based sweetener such as sucrose or fructose in order to reduce the flavor of soju and to mask a bitterness and tangy taste thereof (Korean Patent No. 10-1320082). However, such a glycoside-based sweetener has poor sensory properties such as delayed sweetness, unique bitterness, or foreign body sensation.

In addition, there has been proposed a method of applying allulose to beer or the like (Japanese Patent No. 5764308). However, in this method, allulose is used to maintain or improve a flavor of raw materials, and use of allulose to suppress a smell and bitterness unique to alcohols has not been proposed yet.

The present inventors have made efforts to reduce smell and bitterness of alcohol of alcoholic foods. As a result, the present inventors found that addition of allulose can mask the smell and bitterness of alcohol for a given amount of alcohol, and thus completed the present invention.

**Summary of the Invention**

It is one object of the present invention to provide an agent for improving an aftertaste of alcoholic foods, which includes allulose-containing saccharides.

It is another object of the present invention to provide a method of improving an aftertaste of alcoholic foods using allulose.

In accordance with one aspect of the present invention, an agent for improving an aftertaste of an alcoholic beverage includes allulose-containing saccharides and ethanol.

The allulose according to the present invention may be extracted directly from natural products, or may be chemically or biologically synthesized, without being limited thereto. In addition, the allulose may be provided in crystal form or in allulose-containing syrup form (i.e., in liquid form).

As used herein, "alcoholic beverage" refers to a beverage containing an edible alcohol (i.e., ethanol).

In one embodiment, the ethanol may be present in an amount of 6% by volume (vol%) to 70 vol%, specifically 6 vol% to 50 vol%, 6 vol% to 45 vol%, 6 vol% to 40 vol%, 6 vol% to 30 vol%, 6 vol% to 25 vol%, 6 vol% to 20 vol%, 6 vol% to 18 vol%, 8 vol% to 70 vol%, 8 vol% to 50 vol%, 8 vol% to 45 vol%, 8 vol% to 40 vol%, 8 vol% to 0 vol%, 8 vol% to 25 vol%, 8 vol% to 20 vol%, 8 vol% to 18 vol%, 13 vol% to 70 vol%, 13 vol% to 50 vol%, 13 vol% to 45 vol%, 13 vol% to 40 vol%, 13 vol% to 30 vol%, 13 vol% to 25 vol%, 13 vol% to 20 vol%, 13 vol% to 18 vol%, 15 vol% to 70 vol%, 15 vol% to 50 vol%, 15 vol% to 45 vol%, 15 vol% to 40 vol%, 15 vol% to 30 vol%, 15 vol% to 25 vol%, 15 vol% to 20 vol%, or 15 vol% to 18 vol%, based on the total volume of the alcoholic beverage.

In one embodiment, the alcoholic beverage may be a distilled alcoholic beverage or a fermented alcoholic beverage. As used herein, "distilled alcoholic beverage" refers to an alcoholic beverage obtained by distilling alcohol-fermented fruit juices, plant juices, or brewed starches (cereals).

Specifically, the alcoholic beverage may be a distilled alcoholic beverage, more specifically Soju, kaoliang liquor, brandy, Armagnac, whiskey, vodka, rum, gin, tequila or cognac.

In addition, the alcoholic beverage may be a fermented alcoholic beverage, more specifically beer, wine, sake, or makgeolli.

In one embodiment, the aftertaste may be an alcohol bitterness and/or an alcohol smell.

In one embodiment, improving the aftertaste may include reducing or masking the alcohol flavor.

In one embodiment, the allulose may be present in an amount of 50 parts by weight to 100 parts by weight, specifically 70 parts by weight to 100 parts by weight, 90 parts by weight to 100 parts by weight, 95 parts by weight to 100 parts by weight, 98 parts by weight to 100 parts by weight, 98.5 parts by weight to 100 parts by weight, 99 parts by weight to 100 parts by weight, or 99.5 parts by weight to 100 parts by weight, relative to 100 parts by weight of the saccharides in terms of dried solid content.

The saccharides may further include at least one sweetener, in addition to allulose. Examples of the sweetener may include any known sweetener, for example, monosaccharides, disaccharides, oligosaccharides, sugar alcohols, and high-strength sweeteners, without being limited thereto. Examples of the monosaccharides may include arabinose, xylose, fructose, tagatose, allose, and galactose. The disaccharides refer to a group of carbohydrates consisting of two monosaccharide units linked together, and examples thereof may include lactose, maltose, trehalose, turanose, and cellobiose. The oligosaccharides refer to a group of carbohydrates consisting of 3 or more monosaccharide units linked together, and examples thereof may include fructooligosaccharide, isomaltooligosaccharide, xylooligosaccharide, gentio-oligosaccharide, maltooligosaccharide, and galactooligosaccharide. The sugar alcohols refer to compounds obtained by reducing a carbonyl group in saccharides, and examples thereof may include erythritol, xylitol, arabitol, mannitol, sorbitol, maltitol, and lactitol. The high-strength sweeteners refers to sweeteners having a sweetness ten times or greater that of sucrose, and examples thereof may include aspartame, acesulfame K, rebaudioside A, and sucralose, without being limited thereto. In another embodiment, the saccharides according to the present invention may be free from sucrose, glucose, or a combination thereof.

In one embodiment, the allulose-containing saccharides may be present in an amount of 0.1 g to 10 g, specifically 0.1 g to 3.0 g or 0.3 g to 3.0 g per 1 L of the alcoholic beverage.

In one embodiment, the allulose may be present in an amount of 5 g to 600 g, specifically 5 g to 170 g, 16 g to 170 g, 5.55 g to 166.7 g, or 16.7 g to 166.7 g per 1 L of the ethanol. Herein, the ethanol as a reference refers to pure ethanol (i.e., 100% ethanol).

In accordance with another aspect of the present invention, a method of improving an aftertaste of an alcoholic beverage includes: adding allulose to the alcoholic beverage; or adding allulose to a beverage, followed by adding ethanol to the beverage.

The alcoholic beverage may be prepared commercially by distilling a mash obtained through a process in which cereal grains or potatoes, as raw materials, are subjected to alcohol fermentation, followed by aging, or by diluting water-free alcohol with water and adding a sweetener and the like to the diluted alcohol. An allulose-containing alcoholic beverage may be prepared by adding the allulose to the prepared alcoholic beverage, or by adding the allulose to the raw materials in preparation of the alcoholic beverage.

In the method of improving an aftertaste of an alcoholic beverage, the allulose, the ethanol, the alcoholic beverage, the saccharides, the aftertaste, and improving aftertaste are the same as described in the above aspect.

The present invention provides a method in which allulose is added to alcoholic foods having a high alcohol content, especially alcoholic beverages to mask unpleasant alcohol bitterness and smell, thereby considerably improving sensory preference of the foods without using separate additives.

## Brief Description of Drawings

Fig. 1 is a graph showing a relationship between alcohol concentration and alcohol bitterness according to Examples and Comparative Examples.
Fig. 2 is a graph showing a relationship between alcohol concentration and alcohol smell according to Examples and Comparative Examples.

(※ In the drawings, * indicates a statistically significant trend ($p < 0.1$), and ** indicates a statistically significant difference ($p < 0.05$).)

## Detailed Description of the Invention

Hereinafter, the present invention will be described in more detail with reference to examples. However, it should be noted that these examples are provided for illustration only and should not be construed in any way as limiting the invention. In addition, these examples are provided for more complete understanding of the present invention by one of ordinary skill in the art.

**Experimental Example 1: Preparation and quality analysis of diluted soju**

Generally, alcoholic beverages have varying alcohol contents depending upon the kind and manufacturing method thereof. Beer has an alcohol content of 4 vol% to 12 vol% (generally 5 vol%), wine has an alcohol content of 6 vol% to 12 vol% (generally 8 vol%), Sake has an alcohol content of 8 vol% to 15 vol% (generally 13 vol%), and soju has an alcohol content of 14 vol% to 20 vol% (generally 18 vol%). For an alcoholic beverage having an alcohol content of less than 6 wt%, since an unpleasant flavor of alcohol is not significant, diluted soju having an alcohol content of 8.0% or more was prepared to check change in quality due to addition of allulose.

## (1) Preparation of diluted soju

Diluted soju samples of Comparative Examples 1 to 3 and Examples 1 to 3 were prepared as follows. First, purified water was added to a rectified spirit having an alcohol concentration of 95 vol%, thereby preparing 10 L of a primarily diluted rectified spirit having an alcohol concentration of 50 vol%. Then, activated carbon powder was mixed with the primarily diluted rectified spirit, followed by aging and deodorization for 1 to 3 hours, and then the resulting mixture was clarified using a filter containing diatomaceous earth (SELECT® A20, BEGEROW Co.). Then, sucrose (purity: 98 wt% or more, White Sucrose, CJ Cheiljedang) or allulose (crystal allulose, purity: 98 wt% or more, CJ Cheiljedang) was mixed with the clarified mixture in amounts as listed in Table 1, followed by adding purified water, thereby preparing 1 L of a secondarily diluted rectified spirit. Then, the secondarily diluted rectified spirit was clarified in the same manner as the primarily diluted rectified spirit.

In addition, purified water was added to the clarified primarily diluted rectified spirit to dilute the sprit to alcohol concentrations as listed in Table 2, thereby preparing Sensory Comparison Examples for sensory evaluation.

**Table 1**

| | Primarily diluted rectified spirit | Sucrose | Allulose | Final volume | Alcohol concentration | Sweetener concentration |
|---|---|---|---|---|---|---|
| Note | 50 vol% | - | - | - | - | - |
| Unit | mL | g | g | mL | vol% | g/L% |
| Comparative Example 1 | 160 | 10 | | 1000 | 8.0% | 1.0% |
| Comparative Example 2 | 260 | 10 | | 1000 | 13.0% | 1.0% |
| Comparative Example 3 | 360 | 10 | | 1000 | 18.0% | 1.0% |
| Example 1 | 160 | | 10 | 1000 | 8.0% | 1.0% |
| Example 2 | 260 | | 10 | 1000 | 13.0% | 1.0% |
| Example 3 | 360 | | 10 | 1000 | 18.0% | 1.0% |

**Table 2**

| | Primarily diluted rectified spirit | Sucrose | Allulose | Final volume | Alcohol concent ration | Sweetener concentration | Score of smell or bitterness intensity of alcohol in sensory evaluation |
|---|---|---|---|---|---|---|---|
| Note | 50 vol% | - | - | - | - | - | |
| Unit | mL | g | g | mL | vol% | g/L% | |
| Sensory comparison A1 | 100 | | | 1000 | 5.0% | 0.0% | 1 |
| Sensory comparison A2 | 120 | | | 1000 | 6.0% | 0.0% | 3 |
| Sensory comparison A3 | 140 | | | 1000 | 7.0% | 0.0% | 5 |

(continued)

|  | Primarily diluted rectified spirit | Sucrose | Allulose | Final volume | Alcohol concent ration | Sweetener concentration | Score of smell or bitterness intensity of alcohol in sensory evaluation |
|---|---|---|---|---|---|---|---|
| Note | 50 vol% | - | - | - | - | - | |
| Unit | mL | g | g | mL | vol% | g/L% | |
| Sensory comparison A4 | 160 | | | 1000 | 8.0% | 0.0% | 7 |
| Sensory comparison A5 | 180 | | | 1000 | 9.0% | 0.0% | 9 |
| Sensory comparison B1 | 200 | | | 1000 | 10.0% | 0.0% | 1 |
| Sensory Comparison B2 | 220 | | | 1000 | 11.0% | 0.0% | 3 |
| Sensory Comparison B3 | 240 | | | 1000 | 12.0% | 0.0% | 5 |
| Sensory comparison B4 | 260 | | | 1000 | 13.0% | 0.0% | 7 |
| Sensory comparison B5 | 280 | | | 1000 | 14.0% | 0.0% | 9 |
| Sensory comparison C1 | 300 | | | 1000 | 15.0% | 0.0% | 1 |
| Sensory comparison C2 | 320 | | | 1000 | 16.0% | 0.0% | 3 |
| Sensory comparison C3 | 340 | | | 1000 | 17.0% | 0.0% | 5 |
| Sensory comparison C4 | 360 | | | 1000 | 18.0% | 0.0% | 7 |
| Sensory comparison C5 | 380 | | | 1000 | 19.0% | 0.0% | 9 |

**(2) Sensory Evaluation**

Sensory evaluation was carried out by 15 trained panelists. Here, the panelists were provided with the standard products as Sensory Comparison Examples (Table 2) and trained to be fully aware of an unpleasant bitterness and smell inherent to alcohol and compare intensity of the bitterness and smell to match a randomly offered diluted soju sample to the alcohol concentration thereof.

Specifically, sensory evaluation was carried out through the following procedure. First, the panelists were placed in separate rooms, respectively, and then provided with Sensory Comparison Examples to be aware of the bitterness and smell inherent to alcohol, once more, prior to being provided with the samples of Examples and Comparative Examples. Thereafter, the samples of Example 1 and Comparative Example 1, each labelled with a three-digit random number, were provided in a transparent cup one by one in a double-blind fashion. During evaluation, each of the panelists was instructed to hold the sample in his/her mouth to taste the sample before spitting the sample out, to be prevented from becoming intoxicated due to excessive intake. In addition, after evaluation of each sample, the panelists were allowed to rinse their mouths with cooked rice and water to prepare for evaluation of the next sample. Each of the trained panelists evaluated intensity of the smell and bitterness of alcohol of each of the samples of Examples and Comparative Examples on a 9-point scale (as shown in Table 2) with reference to Sensory Comparison Examples.

For evaluation of Example 1 and Comparative Example 1, evaluation of Example 2 and Comparative Example 2, and evaluation of Example 3 and Comparative Example 3, Sensory Comparison Examples A1 to A5, Sensory Comparison Examples B1 to B5, and Sensory Comparison Examples C1 to C5 were provided, respectively. In addition, after each evaluation, the panelists were allowed to rest for at least 12 to 24 hours to avoid confusion due to excessive intake.

For the samples of Example 1 and Comparative Example 1, the samples of Example 2 and Comparative Example 2, and the samples of Example 3 and Comparative Example 3, scores of intensity of the smell or bitterness of alcohol in sensory evaluation (hereinafter, "sensory scores") were converted into alcohol concentration according to Equation 1, Equation 2, and Equation 3, respectively, thereby calculating perceived alcohol concentrations, which in turn were compared with the actual alcohol concentrations to confirm reduction effects in smell and bitterness of alcohol.

**\<Equation 1\>**

$$\text{Perceived alcohol concentration (\%)} = (0.005 \times \text{sensory score} + 0.045) \times 100$$

**\<Equation 2\>**

$$\text{Perceived alcohol concentration (\%)} = (0.005 \times \text{sensory score} + 0.095) \times 100$$

**\<Equation 3\>**

$$\text{Perceived alcohol concentration (\%)} = (0.005 \times \text{sensory score} + 0.145) \times 100$$

Statistical analysis was performed using SAS 9.1 program (SAS Inc., Cary, NC, USA), and sensory evaluation results were analyzed by t-test method. All analysis results were approved at a significance level of $p < 0.05$.

As a result, it was confirmed that the samples of Examples had a perceived alcohol concentration (i.e., intensity of smell and bitterness of alcohol) that is about 0.6% to 0.8% lower than the actual alcohol concentration. In addition, it could be seen that the samples of Examples 1 to 3 containing allulose exhibited a statistically significant decrease ($p < 0.05$) in smell and bitterness of alcohol, as compared with those of Comparative Examples 1 to 3 containing the same amount of saccharides.

**Table 3**

| Sample | Comparative Example 1 | Example 1 | Comparative Example 2 | Example 2 | Comparative Example 3 | Example 3 |
|---|---|---|---|---|---|---|
| Actual alcohol concentration | 8.0% | | 13.0% | | 18.0% | |
| Perceived alcohol concentration (bitterness) | 7.8% | 7.4% | 13.1% | 12.2% | 17.9% | 17.3% |
| p-value | 0.013 | | 0.000 | | 0.001 | |

**Table 4**

| Sample | Comparative Example 1 | Example 1 | Comparative Example 2 | Example 2 | Comparative Example 3 | Example 3 |
|---|---|---|---|---|---|---|
| Actual alcohol concentration | 8.0% | | 13.0% | | 18.0% | |
| Perceived alcohol concentration (smell) | 7.9% | 7.5% | 13.1% | 12.3% | 18.0% | 17.4% |
| p-value | 0.021 | | 0.000 | | 0.001 | |

**Experimental Example 2: Preparation and quality analysis of diluted soju having different saccharide concentrations**

In order to confirm saccharide concentration-dependent reduction effects in smell and bitterness of alcohol, changes in quality of diluted soju with varying amount of added allulose were checked for a given alcohol concentration. Here, the alcohol concentration was set to 18%, which is an alcohol concentration of the most typical diluted soju in Korea.

**(1) Preparation of diluted soju having different saccharide concentrations**

Samples of Comparative Examples 4 to 8, samples of Examples 4 to 8, and Sensory Comparison Examples D1 to D5 were prepared in the same manner as in Experimental Example 1 except that amounts of saccharides were changed as listed in Tables 5 and 6.

**Table 5**

| | Primarily diluted rectified spirit | Sucrose | Allulose | Final volume | Alcohol concentration | Sweetener concentration |
|---|---|---|---|---|---|---|
| Note | 50 vol% | - | - | - | - | - |
| Unit | mL | g | G | mL | vol% | g/L% |
| Comparative Example 4 | 350 | 1 | | 1000 | 18.0% | 0.10% |
| Comparative Example 5 | 350 | 3 | | 1000 | 18.0% | 0.30% |
| Comparative Example 6 | 350 | 10 | | 1000 | 18.0% | 1.00% |
| Comparative Example 7 | 350 | 30 | | 1000 | 18.0% | 3.00% |
| Comparative Example 8 | 350 | 100 | | 1000 | 18.0% | 10.00% |
| Example 4 | 350 | | 1 | 1000 | 18.0% | 0.10% |
| Example 5 | 350 | | 3 | 1000 | 18.0% | 0.30% |
| Example 6 | 350 | | 10 | 1000 | 18.0% | 1.00% |
| Example 7 | 350 | | 30 | 1000 | 18.0% | 3.00% |
| Example 8 | 350 | | 100 | 1000 | 18.0% | 10.00% |

**Table 6**

| | Primarily diluted rectified spirit | Sucrose | Allulose | Final volume | Alcohol concentration | Sweetener concentration | Score of smell or bitterness of alcohol in sensory evaluation |
|---|---|---|---|---|---|---|---|
| Note | 50 vol% | - | - | - | - | - | |
| Unit | mL | g | g | mL | vol% | g/L% | |
| Sensory comparison D1 | 300 | | | 1000 | 15.0% | 0.0% | 1 |
| Sensory comparison D2 | 320 | | | 1000 | 16.0% | 0.0% | 3 |
| Sensory comparison D3 | 340 | | | 1000 | 17.0% | 0.0% | 5 |
| Sensory comparison D4 | 360 | | | 1000 | 18.0% | 0.0% | 7 |
| Sensory comparison D5 | 380 | | | 1000 | 19.0% | 0.0% | 9 |

**(2) Sensory evaluation**

Sensory evaluation of Examples 4 to 8 and Comparative Examples 4 to 8 was performed in the same manner as in Experimental Example 1. Sensory scores were converted into alcohol concentration according to Equation 3, thereby calculating perceived alcohol concentrations, which, in turn, were compared with the actual alcohol concentrations, respectively, to confirm reduction effects in smell and bitterness of alcohol. Statistical analysis was performed using SAS 9.1 program (SAS Inc., Cary, NC, USA), and sensory evaluation results were analyzed by t-test method.

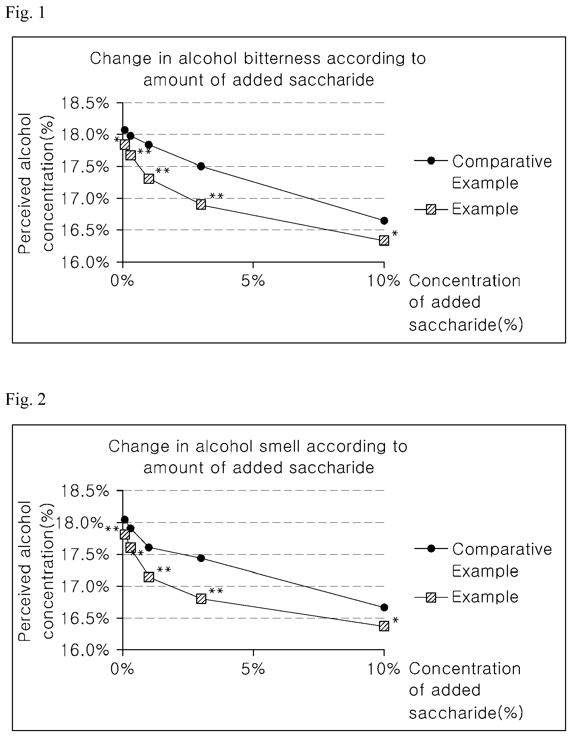

As a result, it was confirmed that the samples of Examples 4 to 7 having an allulose content of 0.1% to 3.0% exhibited a statistically significant decrease in alcohol bitterness, as compared with those of Comparative Examples containing the same amount of sucrose, and the samples of Examples 5 to 7 having an allulose content of 0.3% to 3.0% exhibited a statistically significant decrease in alcohol smell, as compared with those of Comparative Examples (Table 7, Figs. 1 and 2).

In addition, it was confirmed entirely that bitterness of alcohol decreased due to increase in sweetness with increasing concentration of sucrose or allulose. However, considering that the sweetness intensity of allulose is about 70% that of sucrose, it can be seen that reduction effects in smell and bitterness of alcohol is not due to simply sweetness enhancement by addition of saccharides but due to efficacy of allulose.

**Table 7**

| Sample | Comp. Example 4 | Example 4 | Comp. Example 5 | Example 5 | Comp. Example 6 | Example 6 | Comp. Example 7 | Example 7 | Comp. Example 8 | Example 8 |
|---|---|---|---|---|---|---|---|---|---|---|
| Actual alcohol concentration | 18.0% | | 18.0% | | 18.0% | | 18.0% | | 18.0% | |
| Saccharide concentration | 0.1% | | 0.3% | | 1.0% | | 3.0% | | 10.0% | |
| Perceived alcohol concentrat (bitterness ) | 18.1% | 17.8% | 18.0% | 17.7% | 17.8% | 17.3% | 17.5% | 16.9% | 16.6 % | 16.3% |
| p-value | 0.093 | | 0.011 | | 0.001 | | 0.000 | | 0.064 | |
| Perceived alcohol concentration (smell) | 18.0% | 17.8% | 17.9% | 17.6% | 17.6% | 17.1% | 17.4% | 16.8% | 16.7 % | 16.4% |
| p-value | 0.029 | | 0.008 | | 0.000 | | 0.000 | | 0.077 | |

**Claims**

1. An agent for improving an aftertaste of an alcoholic beverage, comprising allulose-containing saccharides and ethanol.

2. The agent according to claim 1, wherein the ethanol is present in an amount of 6 vol% to 70 vol% based on the total volume of the alcoholic beverage.

3. The agent according to claim 1, wherein the alcoholic beverage is a distillated alcoholic beverage.

4. The agent according to claim 1, wherein the aftertaste is a bitterness or smell of alcohol.

5. The agent according to claim 1, wherein improving the aftertaste comprises reducing or masking the alcohol flavor.

6. The agent according to claim 1, wherein the allulose is present in an amount of 50 parts by weight to 100 parts by weight relative to 100 parts by weight of the saccharides in terms of dried solid content.

7. The agent according to claim 1, wherein the allulose-containing saccharides is present in an amount of 0.1 g to 10 g per 1 L of the alcoholic beverage.

8. The agent according to claim 1, wherein the allulose is present in an amount of 5 g to 600 g per 1 L of the ethanol.

9. A method of improving an aftertaste of an alcoholic beverage, comprising:

   adding allulose to the alcoholic beverage; or
   adding allulose to a beverage, followed by adding ethanol to the beverage.

Fig. 1

Change in alcohol bitterness according to
amount of added saccharide

Fig. 2

Change in alcohol smell according to
amount of added saccharide

## INTERNATIONAL SEARCH REPORT

| International application No. |
| --- |
| **PCT/KR2017/010847** |

| A. | CLASSIFICATION OF SUBJECT MATTER |
| --- | --- |

*C12G 3/08(2006.01)i, C12G 3/12(2006.01)i, A23L 5/20(2016.01)i*

According to International Patent Classification (IPC) or to both national classification and IPC

| B. | FIELDS SEARCHED |
| --- | --- |

Minimum documentation searched (classification system followed by classification symbols)

C12G 3/08; A23L 2/54; A23L 1/236; A23L 2/60; A23L 2/52; A23C 9/13; A23L 27/30; A23L 2/38; A23L 1/09; C12G 3/12; A23L 5/20

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: allulose, alcohol taste relieving, bitter taste masking

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2012-0029365 A (MATSUTANI CHEMICAL INDUSTRY CO., LTD.) 26 March 2012 See claim 1; paragraphs [0024]-[0025] and [0027]. | 1-9 |
| A | KR 10-2015-0127155 A (THE COCA-COLA COMPANY) 16 November 2015 See claims 1 and 12. | 1-9 |
| A | JP 2014-014276 A (MATSUTANI CHEM. IND. LTD.) 30 January 2014 See the entire document. | 1-9 |
| A | KR 10-1325061 B1 (NATIONAL UNIVERSITY CORPORATION KAGAWA UNIVERSITY et al.) 05 November 2013 See the entire document. | 1-9 |
| A | US 9049876 B2 (FUJIHARA, H. et al.) 09 June 2015 See the entire document. | 1-9 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 JANUARY 2018 (22.01.2018) | **22 JANUARY 2018 (22.01.2018)** |
| Name and mailing address of the ISA/KR<br>Korean Intellectual Property Office<br>Government Complex-Daejeon, 189 Seonsa-ro, Daejeon 302-701, Republic of Korea<br>Facsimile No. +82-42-481-8578 | Authorized officer<br><br>Telephone No. |

Form PCT/ISA/210 (second sheet) (January 2015)

**EP 3 524 666 A1**

INTERNATIONAL SEARCH REPORT
Information on patent family members

International application No.

**PCT/KR2017/010847**

| Patent document cited in search report | Publication date | Patent family member | Publication date |
|---|---|---|---|
| KR 10-2012-0029365 A | 26/03/2012 | CN 102399654 A | 04/04/2012 |
| | | CN 105586190 A | 18/05/2016 |
| | | HK 1221249 A1 | 26/05/2017 |
| | | JP 2012-060930 A | 29/03/2012 |
| | | JP 5764308 B2 | 19/08/2015 |
| | | TW 201219563 A | 16/05/2012 |
| | | US 2012-0070534 A1 | 22/03/2012 |
| KR 10-2015-0127155 A | 16/11/2015 | AU 2014-236555 A1 | 24/09/2015 |
| | | CN 105188421 A | 23/12/2015 |
| | | EP 2993990 A1 | 16/03/2016 |
| | | EP 2993990 A4 | 20/07/2016 |
| | | MX 2015012037 A | 16/12/2015 |
| | | US 2014-0271996 A1 | 18/09/2014 |
| | | US 2014-0272068 A1 | 18/09/2014 |
| | | US 2014-0322389 A1 | 30/10/2014 |
| | | US 9717267 B2 | 01/08/2017 |
| | | WO 2014-152791 A1 | 25/09/2014 |
| JP 2014-014276 A | 30/01/2014 | NONE | |
| KR 10-1325061 B1 | 05/11/2013 | EP 2090180 A1 | 19/08/2009 |
| | | EP 2090180 A4 | 21/08/2013 |
| | | JP 4942001 B2 | 30/05/2012 |
| | | KR 10-1325061 B1 | 05/11/2013 |
| | | KR 10-2009-0077072 A | 14/07/2009 |
| | | US 2009-0304891 A1 | 10/12/2009 |
| | | WO 2008-059623 A1 | 22/05/2008 |
| US 9049876 B2 | 09/06/2015 | CN 102429201 A | 02/05/2012 |
| | | CN 102429201 B | 15/07/2015 |
| | | HK 1166245 A1 | 11/12/2015 |
| | | JP 2012-070708 A | 12/04/2012 |
| | | JP 5859191 B2 | 10/02/2016 |
| | | KR 10-2012-0033282 A | 06/04/2012 |
| | | TW 201216863 A | 01/05/2012 |
| | | TW I527524 B | 01/04/2016 |
| | | US 2012-0076908 A1 | 29/03/2012 |
| | | US 2015-0230509 A1 | 20/08/2015 |

Form PCT/ISA/210 (patent family annex) (January 2015)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101320082

- JP 5764308 B